# EUROPEAN PATENT APPLICATION

(11) **EP 1 653 638 A1**
(43) Date of publication of application: **03.05.2006**
(21) Application number: 04771370.6
(22) Date of filing: 06.08.2004
(51) Int. Cl.: H04B 7/26

(54) **MOBILE STATION APPARATUS AND RECEIVING METHOD**

(30) Priority: 08.08.2003 JP 2003290699
(71) Applicant: MATSUSHITA ELECTRIC INDUSTRIAL CO., LTD., Kadoma-shi, Osaka 571-8501 (JP)
(72) Inventor: HIRAKI, Toshiaki, Nomi-gun, Ishikawa 929-0121 (JP); SHINOI, Kenichiro, Kanagawa 223-0064 (JP)
(74) Representative: Grünecker, Kinkeldey, Stockmair & Schwanhäusser Anwaltssozietät
(86) International application number: PCT/JP2004/011371
(87) International publication number: WO 2005/015780

(57) **Abstract**

Amobile station apparatus is provided that performs receive processing efficiently and reduces unnecessary power consumption. In this mobile station apparatus, a signaling detector (71) detects a compressed mode gap period in an uplink channel, that is, a period in which no uplink signal is transmitted to a base station, and reports this period to a controller (72). If the period detected in the signaling detector (71) contains transmission timing of an ACK/NACK signal, the controller (72) controls an HS-PDSCH receive processor (40) to stop the receive processing of the packet data corresponding to the ACK/NACK signal.

## Description

### Technical Field

The present invention relates to a mobile station apparatus and receiving method.

### Background Art

Presently, for mobile communications systems, various discussions are ongoing regarding application of a technology called HSDPA (High Speed Downlink Packet Access) to data transmission between the base station apparatus (hereinafter "base station") and the mobile station apparatus (hereinafter "mobile station"). HSDPA is a technology for which standardization by 3GPP (3rd Generation Partnership Project) is in progress. HSDPA allows improved downlink throughput from the base station to the mobile station utilizing adaptive modulation, H-ARQ (Hybrid-Automatic Repeat reQuest), high speed selection of communicating mobile stations, and adaptive transmission parameter control in accordance with the conditions of radio channels.

Channels that are commonly used in HSDPA include HS-SCCH (Shared Control Channel for HS-DSCH (High Speed Downlink Shared Channel)), HS-PDSCH (High Speed Physical Downlink Shared Channel), and HS-DPCCH (Dedicated Physical Control Channel (uplink) for HS-DSCH). The HS-SCCH is a downlink control channel formed with sub-frames of three slots each. Control information representing, for example, the modulation scheme for the HS-PDSCH, the number of multi-codes, and the transport block size, is transmitted through the HS-SCCH from the base station to the mobile station. The HS-PDSCH is a downlink data channel formed with sub-frames of three slots each and carries packet data. The HS-DPCCH is an uplink control channel formed with sub-frames of three slots each and carries feedback signals associated with the HS-PDSCH. In an HS-DPCCH sub-frame, an ACK (ACKnowledgement) signal or NACK (Negative ACKnowledgement) signal for H-ARQ operation is transmitted in the first slot and a downlink CQI (Channel Quality Indicator) is transmitted in the second and third slots. As for the H-ARQ ACK/NACK signal, an ACK signal is transmitted to the base station of the cell providing HSDPA services ("HSDPA serving cell") when the decoding result of the HS-PDSCH associated with the above HS-DPCCH contains no error and is good, and a NACK signal is transmitted when the decoding result contains an error and is no good. The CQI is used to report transmission quality on downlink channels in the reference measurement period to the base station of the HSDPA serving cell. Generally, a CQI represents a number that is associated with transmission quality and that specifies a particular combination of a modulation scheme and coding factor that allow proper demodulation in the mobile station with this transmission quality. The base station performs scheduling with reference to this CQI, determines the mobile station to transmit packet data to through the HS-PDSCH, and transmits the packet data through the HS-PDSCH to this mobile station at a transmission rate in accordance with the CQI. The structures of these channels are disclosed, for example, in non-patent literature 1 below.

Conventional HS-PDSCH receive processing in the mobile station will be described below.
(1) The mobile station receives an HS-SCCH set designated by higher layers and monitors the HS-SCCH set. The HS-SCCH set contains a plurality of HS-SCCHs, and the mobile station monitors them to see if there is an HS-SCCH for the mobile station. When a plurality of mobile stations are present in the HSDPA serving cell, the HS-SCCHs in the HS-SCCH set are transmitted with encoded information representing which mobile station each HS-SCCH is for, thereby allowing the mobile station to detect the HS-SCCH for the mobile station from a plurality of HS-SCCHs received.
(2) Upon detecting in the HS-SCCH set an HS-SCCH for the mobile station, the mobile station starts receiving the HS-PDSCH specified by the control information transmitted in the HS-SCCH. If no HS-SCCH is detected for the mobile station, the mobile station does not receive the HS-PDSCH. The control information includes information as to which mobile station the HS-SCCH is for. In addition, the control information includes the modulation scheme of the HS-PDSCH, the number of multi-codes, and transport block size, as information necessary to receive the HS-PDSCH.
(3) The mobile station performs demodulation, decoding, and error detection (CRC: Cyclic Redundancy Check) with the received HS-PDSCH.
(4) When the error detection result shows no error and is good, the mobile station transmits an ACK signal to the base station of the HSDPA serving cell. When the error detection result shows an error and is no good, the mobile station transmits a NACK signal to the base station of the HSDPA serving cell. The mobile station repeats transmitting an ACK/NACK signal for the number of times designated by signaling from higher layers (i.e. "N_acknack_transmit"). As for the ARQ scheme, HSDPA employs H-ARQ.The receive processing in the mobile station such as described above is disclosed, for example, in non-patent literature 2 below.
   Non-patent Document 1: 3GPP TS 25.211 V5.4.0 (3rd Generation Partnership Project; Technical Specification Group Radio Access Network; Physical channels and mapping of transport channels onto physical channels(FDD)(Release 5))
   Non-patent Document 2: 3GPP TS 25.214 V5.5.0 (3rd Generation Partnership Project; Technical Specification Group Radio Access Network; Physical layer procedures (FDD)(Release 5))

### Disclosure of Invention

### Problems to be Solved by the Invention

Signaling is given from higher layers to the mobile station that is provided HSDPA services, including, for example, the number of ACK/NACK signal retransmissions, gap timing in compressed mode (start timing and gap length), the timing the HSDPA serving cell changes, and the timing the base station of the HSDPA serving cell changes transmit diversity mode.

The conventional mobile station detects signaling such as above yet receives the HS-SCCH and HS-PDSCH and transmits ACK/NACK signals without taking into account the information represented in the signaling, and so the receive processing and transmit processing are inefficient and consume unnecessary power.

It is therefore an object of the present invention to provide a mobile station apparatus and receiving method that allow efficient performance of receive processing and reduce unnecessary power consumption. Means for solving the problem

In accordance with one aspect of the present invention, a mobile station apparatus of the present invention comprises: a first receiver that performs first receive processing including demodulation, decoding, and error detection of a downlink data channel; a second receiver that performs second receive processing, including demodulation and decoding of a downlink control channel that carries control information required in the first receive processing; a transmitter that transmits a response signal in response to the error detection in the first receiver via an uplink control channel to a base station apparatus; and a controller that stops at least one of the first receive processing, the second receive processing, and transmission processing of the response signal in the transmitter, depending on a transmission timing of the response signal.

By virtue of the above configuration, the present invention stops at least one of the first receive processing, the second receive processing, and the transmission processing of the response signal, depending on the transmission timing of the response signal (i.e. ACK/NACK signal), thereby allowing efficient performance of the receive processing and transmit processing.

### Advantageous Effect of the invention

The present invention reduces unnecessary power consumption in the mobile station apparatus.

### Brief Description of Drawings

FIG.1 is a block diagram showing a configuration of amobile station according to Embodiment 1 of the present invention;
FIG.2 is a process flowchart of a mobile station according to Embodiment 1 of the present invention;
FIG.3 illustrates transmission and reception timings of channels in a mobile station according to Embodiment 1 of the present invention;
FIG.4 is a process flowchart of a mobile station according to Embodiment 2 of the present invention;
FIG.5 illustrates transmission and reception timings of channels in a mobile station according to Embodiment 2 of the present invention;
FIG.6 is a process flowchart of a mobile station according to Embodiment 3 of the present invention; and
FIG.7 illustrates transmission and reception timings of channels in a mobile station according to Embodiment 3 of the present invention.

### Best Mode for Carrying Out the Invention

Now, embodiments of the present invention will be described below in detail with reference to the accompanying drawings.

### (Embodiment 1)

As mentioned above, high layers send signaling to the mobile station to report the gap timing in compressed mode. "Compressed mode" here refers broadly to scheme that provides a predetermined blank period (i.e. gap period) between slots or between frames by temporarily decreasing the spreading factor. In a compressed mode gap period in uplink channels, the base station does not receive signals from the mobile station to which the DPCH is assigned. Accordingly the mobile station does not transmit uplink signals to the base station. In HSDPA, in a compressed mode gap period in uplink channels, the base station of the HSDPA serving cell does not receive the HS-DPCCH from the mobile station to which the DPCH is assigned. Accordingly, the mobile station does not transmit an ACK/NACK signal in the HS-DPCCH.

Now, after packet data is transmitted in the HS-PDSCH and a certain amount of time passes without an ACK/NACK signal from the mobile station in response to the packet data, the base station of the HSDPA serving cell determines that a packet loss occurred in the propagation path and retransmits the packet data. H-ARQ is employed for the retransmission scheme. As described above, no ACK/NACK signal is transmitted in the HS-DPCCH in a compressed mode gap period in uplink channels, and so the base station of the HSDPA serving cell retransmits the packet data to the mobile station. Consequently, even when the packet data, which entails no ACK/NACK signal transmission, is lost, the packet data is retransmitted anyway, so that the problem of packet loss does not occur to the mobile station. Now, the mobile station of the present embodiment is designed to stop receive processing with respect to packet data that does not entail transmission of an ACK/NACK signal and reduce power consumption. Now, the mobile station of the present embodiment will be described below in detail.

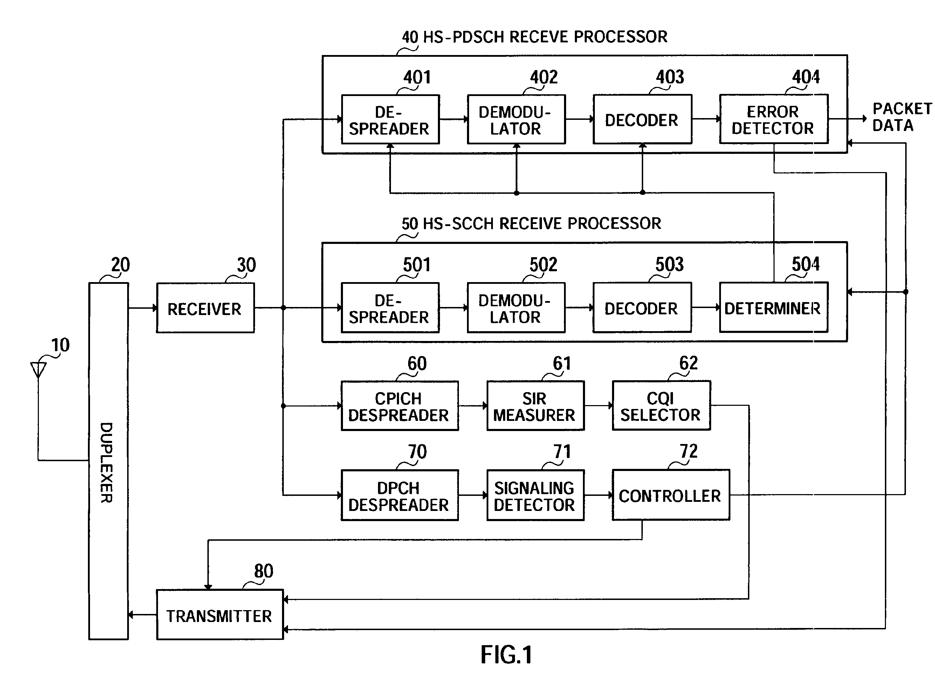

FIG.1 is a block diagram showing a configuration of the mobile station according to Embodiment 1 of the present invention. In the mobile station shown in FIG.1, a signal transmitted from the base station is received by receiver 30 via antenna 10 and duplexer 20. Receiver 30 performs predetermined radio processing upon this received signal, including down-conversion. Received signals after radio processing are inputted into HS-PDSCH receive processor 40, HS-SCCH receive processor 50, CPICH (Common Pilot CHannel) despreader 60, and DPCH despreader 70. The received signals include an HS-PDSCH signal, HS-SCCH signal, CPICH signal, and DPCH signal.

HS-SCCH receive processor 50 has despreader 501, demodulator 502, decoder 503, and determiner 504, and performs the receive processing of the HS-SCCH transmitted from the base station. As for the HS-SCCH, multiple HS-SCCHs are contained in a set (i.e. HS-SCCH set). Each HS-SCCH carries information as to which mobile station the HS-SCCH is for, and carries, in addition, control information that is necessary to receive the packet data transmitted in the HS-PDSCH, including the modulation scheme of the HS-PDSCH, the number of multi-codes, and transport block size. Despreader 501 despreads the HS-SCCHs in the HS-SCCH set using respective, predetermined spreading codes. The HS-SCCHs after the despreading are demodulated in demodulator 502, decoded in decoder 503, and the decoding results are inputted into determiner 504. Given these decoding results, determiner 504 determines whether or not there is an HS-SCCH for the mobile station among the multiple HS-SCCHs in the HS-SCCH set. If as a result of determination there is an HS-SCCH for the mobile station, determiner 504 sends spreading code information including the number of multi-codes to despreader 401, modulation scheme information including the modulation scheme to demodulator 402, and coding information including the transport block size to decoder 403, all represented by the control information of the HS-SCCH.

HS-PDSCH receive processor 40 has despreader 401, demodulator 402, decoder 403, and error detector 404, and performs the receive processing of the HS-PDSCH transmitted from the base station. The HS-PDSCH carries packet data formed with information bits. In accordance with the spreading code information from determiner 504, despreader 401 despreads the HS-PDSCH. The HS-PDSCH after the despreading is demodulated in demodulator 402 in accordance with the modulation scheme information from determiner 504 and decoded in decoder 403 in accordance with the coding information from determiner 504, and the decoding result (i.e. packet data) is inputted in error detector 404. Error detector 404 performs error detection such as CRC with the packet data inputted. Error detector 404 then generates an ACK signal or NACK signal depending on the error detection result and inputs the signal in transmitter 80. When the packet data contains no error and is good, error detector 404 generates and inputs to transmitter 80 an ACK signal as a response signal for the error detection. When the packet data contains an error and is no good, error detector 404 generates and inputs to transmitter 80 a NACK signal as a response signal for the error detection. Transmitter 80 transmits the ACK/NACK signal to the base station via the HS-DPCCH under control of controller 72.

CPICH despreader 60 despreads the CPICH using a predetermined spreading code. The CPICH carries the pilotsignal. The CPICH after the despreading is inputted into SIR measurer 61. SIR measurer 61 measures the SIR (Signal to Noise Ratio) as the reception quality of the pilot signal, and inputs the SIR value in CQI selector 62. CQI selector 62 has a table in which multiple SIR values and CQIs are associated. With reference to this table, CQI selector 62 selects a CQI associated with the SIR value inputted from SIR measurer 61 and inputs this CQI in transmitter 80. The received SIR value of the pilot signal represents downlink transmission quality. Accordingly, when a great SIR value is measured, a CQI that is associated with a high transmission rate is selected. Transmitter 80 transmits the inputted CQI to the base station via the HS-DPCCH.

DPCH despreader 70 despreads the DPCH using a predetermined spreading code. The DPCH carries signaling from higher layers. By means of this signaling, the mobile station is reported the number of ACK/NACK signal retransmissions, compressed mode gap timing in an uplink channel (start timing and gap length), the timing the HSDPA serving cell changes, and the timing the base station of the HSDPA serving cell changes transmit diversity mode. The DPCH after the despreading is inputted in signaling detector 71. From the above-described signaling in the despread DPCH, signaling detector 71 detects the compressed mode gap period in an uplink channel. That is, signaling detector detects the period in which no uplink signal is transmitted to the base station, and reports this period to controller 72.

If the period detected in signaling detector 71 includes transmission timing of an ACK/NACK signal, controller 72 controls HS-PDSCH receive processor 40 to stop receive processing with respect to the packet data corresponding to the ACK/NACK signal. In other words, controller 72 stops receive processing for the HS-PDSCH sub-frame carrying the packet data corresponding to the ACK/NACK signal. In addition, if the packet data is not received, the HS-SCCH control information corresponding to the packet data becomes unnecessary. Consequently, controller 72 controls HS-SCCH receive processor 50 to stop the receive processing of the control information that was necessary in the receive processing of the packet data, the receive processing of which is now stopped. In other words, controller 72 stops the receive processing of the HS-SCCH sub-frame that carries the control information.

As for the manner of stopping the receive processing, HS-PDSCH receive processor 40 may stop the entire processing including despreading, demodulation, decoding, and error detection, or stop one or some of these. Likewise, HS-SCCH receive processor 50 may also stop the entire processing including despreading, demodulation, decoding, and determination, or stop one or some of these. Although a case has been described above with the present embodiment where both HS-PDSCH receive processing and HS-SCCH receive processing are stopped, the present invention is by no means limited to this, and it is equally possible to stop one of them. The same applies to the following embodiments.

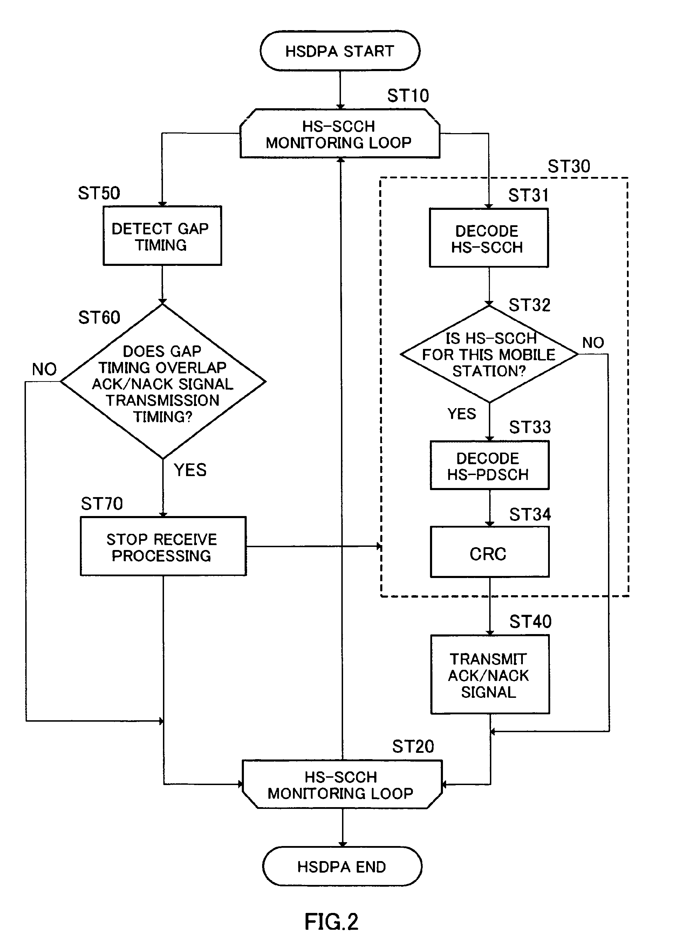

Next, the process flow of the mobile station according to the present embodiment will be described below with reference to FIG.2. Once HSDPA is started, the mobile station repeats the series of processing from step (hereinafter "ST") 10 to ST20 (i.e. HS-SCCH monitoring loop) until HSDPA ends. In the HS-SCCH monitoring loop, the mobile station receives and monitors the HS-SCCH set designated by higher layers. In other words, the mobile station decodes a plurality of HS-SCCHs contained in the HS-SCCH set (ST31), and monitors them to see whether these HS-SCCHs contain one for the mobile station (ST32) . When there is no HS-SCCH for the mobile station (ST32 "NO"), the mobile station moves onto ST20 and continues monitoring the HS-SCCHs. On the other hand, when there is an HS-SCCH for the mobile station (ST32 "YES"), the mobile station decodes the HS-PDSCH in accordance with the control information transmitted in the HS-SCCH for this mobile station (ST33) and performs CRC with the packet data of the decoding result (ST34). The mobile station generates an ACK signal or NACK signal depending on the CRC result and sends the signal to the base station of the HSDPA serving cell (ST40). ST31-ST34 in the flowchart of FIG.2 make up the receive processing of the HS-SCCH and HS-PDSCH (ST30).

The mobile station performs the processing of ST50 to ST70 in parallel with the processing of ST30. That is, the mobile station detects the compressed mode gap timing in an uplink channel from signaling from higher layers (ST50). If transmission timing of an ACK/NACK signal overlaps the compressed mode gap period--that is, if the compressed mode gap period includes transmission timing of an ACK/NACK signal (ST60 "YES")--the mobile station stops the series of receive processing of ST30 (ST70). After the receive processing stops, the mobile station moves onto ST20 and continues monitoring the HS-SCCHs. If transmission timing of an ACK/NACK signal does not overlap the compressed mode gap period (ST60 "NO"), the mobile station moves onto ST20 without stopping the receive processing and continues monitoring the HS-SCCHs.

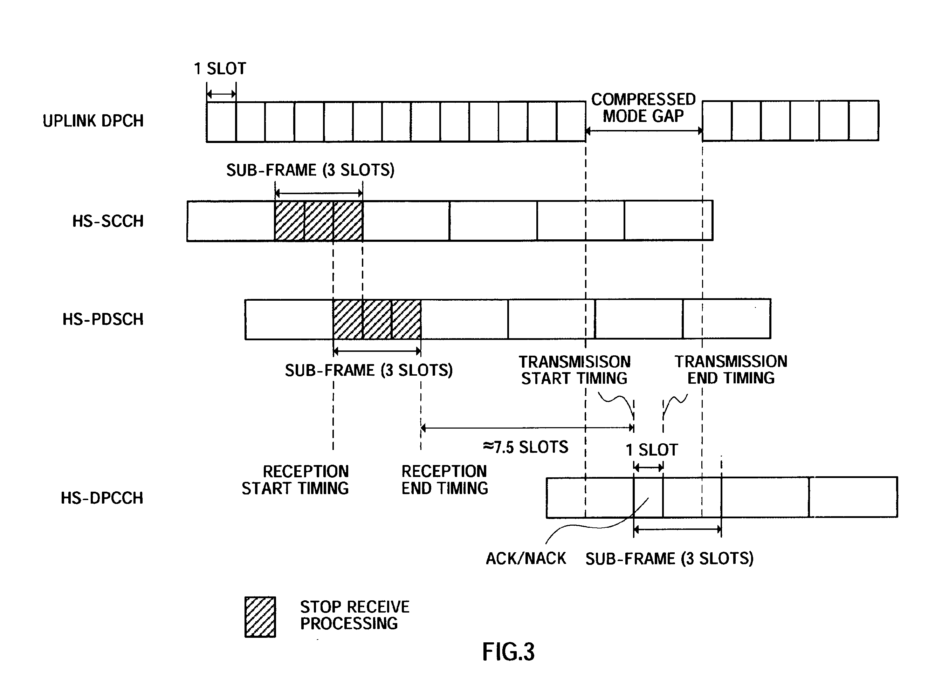

Next, the relationships between transmission and reception timings of channels that are transmitted and receive in the mobile station will be explained with reference to FIG.3. HS-SCCH sub-frames and HS-PDSCH sub-frames are formed with three slots each. As for the relationship between an HS-PDSCH and the HS-SCCH associated with the HS-PDSCH (i.e. the HS-SCCH carrying the control information that is necessary to receive the HS-PDSCH), the first slot in an HS-PDSCH sub-frame overlaps with the last slot in an HS-SCCH sub-frame. In other words, at the timing one slot before an HS-SCCH sub-frame reception end timing, a sub-frame of the HS-PDSCH associated with the HS-SCCH starts being received. Then, at a timing approximately 7.5 slots after the HS-PDSCH sub-frame reception end timing, an ACK or NACK signal in response to the HS-PDSCH sub-frame is transmitted in an HS-DPCCH sub-frame. In addition, the mobile station determines the compressed mode gap period in an uplink channel (uplink DPCH in FIG. 3) from signaling from higher layers while receiving the HS-SCCH and HS-PDSCH. Then, the mobile station stops the receive processing of the HS-PDSCH corresponding to the ACK/NACK signal having its transmission timing in the gap period. In other words, the mobile station stops the receive processing of the HS-PDSCH sub-frame having its reception end timing approximately 7.5 slots before the transmission start timing of the ACK/NACK signal having its transmission timing in the compressed mode gap period. The mobile station stops the receive processing of the HS-SCCH corresponding to the HS-PDSCH, the receive processing of which is now stopped. In other words, the mobile station stops the receive processing of the HS-SCCH sub-frame having its last slot overlap the first slot of the HS-PDSCH sub-frame having its receive processing stopped.

The present embodiment is thus designed to stop unnecessary receive processing of the HS-SCCH and HS-PDSCH, thereby reducing unnecessary power consumption in the mobile station.

### (Embodiment 2)

In HSDPA, there are times the mobile station repeats transmitting an ACK/NACK signal in response to the same HS-PDSCH sub-frame for the number of times designated by signaling from higher layers. When an ACK/NACK signal is transmitted repeatedly, once the HS-PDSCH is assigned, the mobile station does not decode the HS-PDSCH anymore. This is provided by 3GPP. When the mobile station of the present embodiment repeats transmitting an ACK/NACK signal in response to the same HS-PDSCH sub-frame a number of times, once the mobile station performs the receive processing of an HS-PDSCH for the mobile station, the mobile station then stops the receive processing of the HS-PDSCH of the second and later retransmissions and the HS-SCCH corresponding to the HS-PDSCH, and thus reduces power consumption. Now, the mobile station according to the present embodiment will be described now.

First, the configuration of the mobile station of the present embodiment will be described below with reference again to FIG.1. However, the following explanation will be limited to parts that are different from Embodiment 1. Referring to FIG.1, a DPCH after despreading is inputted in signaling detector 71, and signaling detector 71 determines the number of ACK/NACK signal retransmissions (hereinafter simply "the number of retransmissions") from the above-described signaling in the despread DPCH, and reports the number of retransmissions to controller 72.

Controller 72 reports the number of retransmissions to transmitter 80. Transmitter 80 repeats transmitting an ACK/NACK signal inputted from error detector 404 for the number of times reported from controller 72. That is, transmitter 80 repeats transmitting the ACK/NACK signal for the same HS-PDSCH sub-frame.

Meanwhile, with regard to the number of retransmissions, controller 72 controls HS-PDSCH receive processor 40 to stop the receive processing of the HS-PDSCH sub-frames of the second and later retransmissions. For example, when the number of retransmissions is two (N_acknack_transmit=2), controller 72 controls HS-PDSCH receive processor 40 to perform the receive processing of the sub-frame corresponding to the first ACK or NACK signal and then stop the receive processing in the following one sub-frame period. In addition, when packet data is not received in the HS-PDSCH, the HS-SCCH control information for the packet data becomes unnecessary. Consequently, controller 72 controls HS-SCCH receive processor 50 to stop the receive processing of the control information that was necessary in the receive processing of the above packet data, the receive processing of which is now stopped. That is, controller 72 stops the receive processing of the HS-SCCH sub-frame carrying the control information.

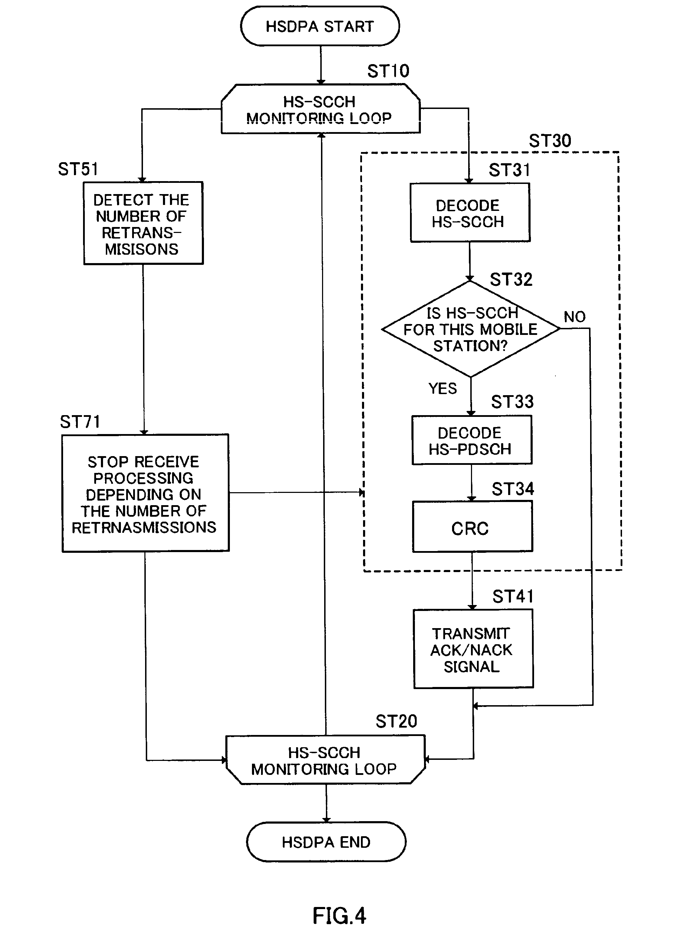

Next, the process flow of the mobile station according to the present embodiment will be described below with reference to FIG.4. Steps that are identical to those in Embodiment 1 will be assigned the same reference numerals without further explanations. The mobile station transmits an ACK or NACK signal to the base station of the HSDPA serving cell based on CRC result (ST41). The mobile station repeats transmitting the ACK or NACK signal for the number of times designated by signaling from higher layers. If the number of retransmissions is designated two times, the mobile station transmits the ACK/NACK signal to the same HS-PDSCH sub-frame twice.

Meanwhile, the mobile station performs the processing of ST51 to ST71 in parallel with the processing of ST30, and stops the receive processing of the HS-PDSCH and HS-SCCH according to the number of retransmissions signaled from higher layers (N_acknack_transmit). That is to say, the mobile station first detects the number of retransmissions (N_acknack_transmit) designated by signaling from higher layers (ST51). Then, the mobile station stops the series of receive processing of ST30 in the sub-frame periods corresponding to the second and later retransmissions (ST71). After the receive processing stops, the mobile station moves onto ST20 and continues monitoring the HS-SCCHs.

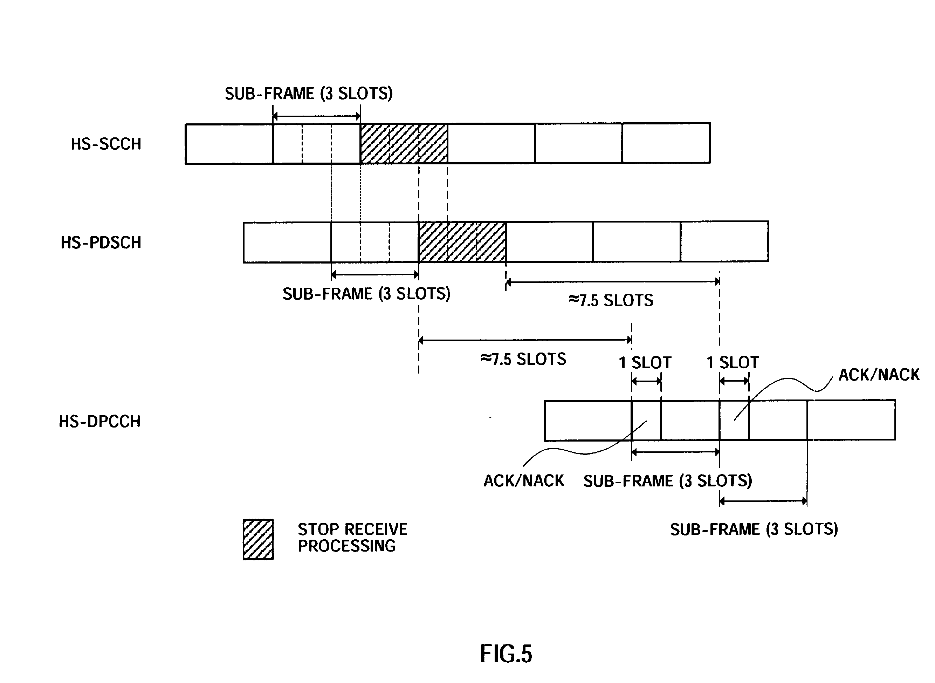

Next, the relationships between transmission and reception timings of channels transmitted and received in the mobile station of the present embodiment will be described below with reference to FIG.5. HS-SCCH sub-frames and HS-PDSCH sub-frames are formed with three slots each. As for the relationship between an HS-PDSCH and the HS-SCCH associated with the HS-PDSCH, the first slot in an HS-PDSCH sub-frame overlaps the last slot in an HS-SCCH sub-frame. In other words, at the timing one slot before an HS-SCCH sub-frame reception end timing, a sub-frame of the HS-PDSCH associated with the HS-SCCH starts being received. Then, at a timing approximately 7.5 slots after the HS-PDSCH sub-frame reception end timing, an ACK or NACK signal for the HS-PDSCH sub-frame is transmitted in an HS-DPCCH sub-frame. If the number of retransmissions is two times, the same ACK or NACK signal is retransmitted in the next HS-DPCCH sub-frame. The mobile station stops the receive processing of the HS-PDSCH sub-frame in the sub-frame period corresponding to the second ACK/NACK signal. That is, the mobile station stops the receive processing of the HS-PDSCH sub-frame having its reception end timing approximately 7.5 slots before the transmission start timing of the second ACK or NACK signal. Likewise, when the number of retransmissions is three or greater, the mobile station stops the receive processing of all HS-PDSCH sub-frames having their reception end timing approximately 7.5 slots before the transmission start timing of the second and later ACK/NACK signals. The mobile station stops the receive processing of the HS-PDSCH sub-frames of the second and later retransmissions. In addition, the mobile station stops the receive processing of the HS-SCCH corresponding to the HS-PDSCH having the receive processing stopped. In other words, the mobile station stops the receive processing of the HS-SCCH sub-frames having their last slot overlap the first slot of the HS-PDSCH sub-frames having their receive processing stopped.

The present embodiment is thus designed to stop unnecessary receive processing of the HS-SCCH and HS-PDSCH, thereby reducing unnecessary power consumption in the mobile station.

### (Embodiment 3)

In HSDPA, when the HSDPA serving cell changes during the period after the mobile station decodes an HS-PDSCH until transmitting an ACK/NACK signal, the base station transmitting the HS-PDSCH and the base station receiving the ACK/NACK signal will be different. As a result, the base station receiving the ACK/NACK signal is unable to determine to which packet data the ACK/NACK signal pertains. Consequently, the ACK/NACK signal serves no purpose at the base station where they are received. As mentioned above in Embodiment 1, in such cases, the base station of the HSDPA serving cell after the change retransmits the packet data corresponding to the ACK/NACK signal to the mobile station, so that the problem of packet loss does not occur to the mobile station. The mobile station of the present embodiment is therefore designed to stop transmitting an ACK/NACK signal that cannot be transmitted by the timing the HSDPA serving cell changes, thereby reducing interference against other mobile stations. Furthermore, the present embodiment is designed to stop the receive processing of packet data for which an ACK/NACK signal cannot be transmitted by the timing the HSDPA serving cell changes, thereby reducing power consumption. Now, the mobile station of the present embodiment will be described below.

First, the configuration of the mobile station of the present embodiment will be described with reference again to FIG.1. However, the following explanation will be limited to parts that are different from Embodiment 1. Referring to FIG.1, a DPCH after despreading is inputted in signaling detector 71, and signaling detector 71 determines the timing the HSDPA serving cell changes from signaling contained in the DPCH after despreading. That is, detector 71 detects the timing the destination of ACK/NACK signals changes to a different base station and reports the change timing to controller 72.

Controller 72 controls transmitter 80 to stop transmitting ACK/NACK signals, the transmission end timing of which comes after the change timing detected in signaling detector 71. If an ACK or NACK signal is being transmitted, the transmission is disrupted in the middle. Controller 72 controls HS-PDSCH receive processor 40 to stop the receive processing of the packet data corresponding to the ACK/NACK signal the transmission of which is stopped. In other words, controller 72 stops receive processing for the HS-PDSCH sub-frame that carries the packet data corresponding to the ACK/NACK signal. In addition, if the packet data is not received, the HS-SCCH control information for the packet data becomes unnecessary. Consequently, controller 72 controls HS-SCCH receive processor 50 to stop the receive processing of the control information that was necessary in the receive processing of the above packet data having its receive professing stopped. In other words, controller 72 stops the receive processing of the HS-SCCH sub-frame that carries the control information.

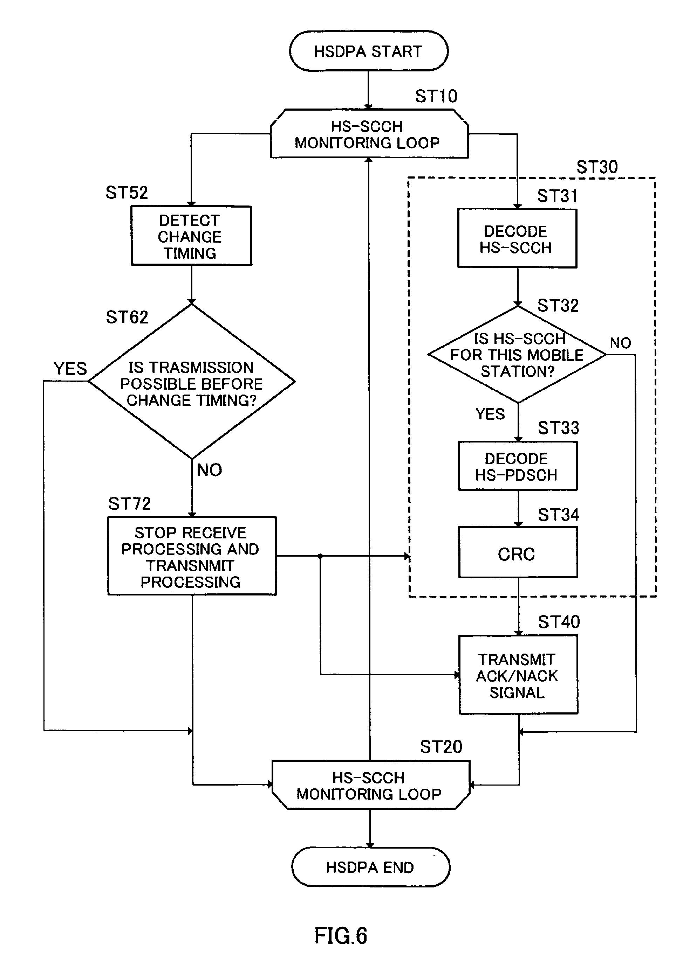

Next, the process flow of the mobile station according to the present embodiment will be described below with reference to FIG.6.Steps that are identical to those in Embodiment 1 will be assigned the same reference numerals without further explanations. The mobile station performs the processing of ST52-ST72 in parallel with the processing of ST30. That is to say, the mobile station detects the timing the HSDPA serving cell changes from signaling fromhigher layers (ST52). If an ACK/NACK signal transmission does not end before the change timing, that is to say, if the change timing comes between an HS-PDSCH sub-frame reception start timing and the transmission end timing of the ACK/NACK signal corresponding to this sub-frame (ST62 "NO"), the mobile station stops the series of receive processing of ST30 and stops the transmission processing of ST40 (ST72). Thereafter the mobile station moves onto ST20 and continues monitoring the HS-SCCHs. If the ACK/NACK signal transmission can be finished before the timing the HSDPA serving cell changes (ST62 "YES"), the mobile station moves onto ST20 without stopping receive processing or transmission procession, and continues monitoring the HS-SCCHs.

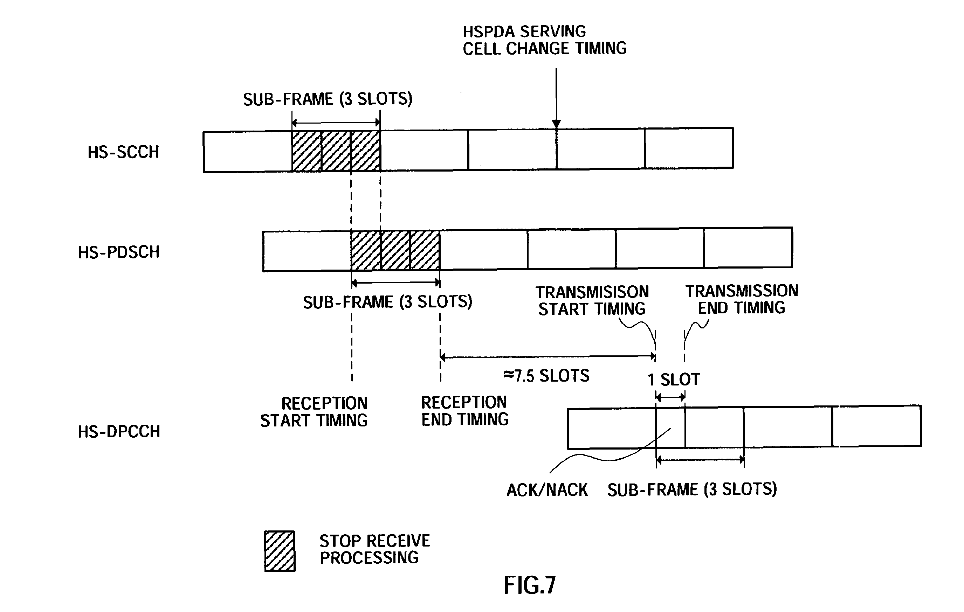

Next, the relationships between transmission and reception timings of channels that are transmitted and receive in the mobile station of the present embodiment will be explained with reference to FIG.7. HS-SCCH sub-frames and HS-PDSCH sub-frames are formed with three slots each. As for the relationship between an HS-PDSCH and the HS-SCCH associated with the HS-PDSCH, the first slot in an HS-PDSCH sub-frame overlaps the last slot in an HS-SCCH sub-frame. In other words, at the timing one slot before an HS-SCCH sub-frame reception end timing, a sub-frame of the HS-PDSCH associated with the HS-SCCH starts being received. Then, at a timing approximately 7.5 slots after the HS-PDSCH sub-frame reception end timing, an ACK or NACK signal in response to the HS-PDSCH sub-frame is transmitted in an HS-DPCCH sub-frame. In addition, the mobile station determines the timing the HSDPA serving cell changes from signaling from higher layers while receiving the HS-SCCH and HS-PDSCH. If the change timing comes between the reception start timing of an HS-PDSCH sub-frame and the transmission end timing of the ACK or NACK signal corresponding to the sub-frame, the mobile station stops transmitting the ACK or NACK signal and stops the receive processing of the sub-frame. In other words, the mobile station stops the receive processing of the HS-PDSCH sub-frame having its reception end timing approximately 7.5 slots before the transmission start timing of the ACK/NACK signal having its transmission stopped. In addition, the mobile station stops the receive processing of the HS-SCCH corresponding to the HS-PDSCH having its receive processing stopped. In other words, the mobile station stops the receive processing of the HS-SCCH sub-frame having its last slot overlap the first slot of the HS-PDSCH sub-frame having its receive processing stopped.

Similar to Embodiment 1, the present embodiment is designed to stop unnecessary receive processing of the HS-SCCH and HS-PDSCH, thereby reducing unnecessary power consumption in the mobile station. In addition, the present embodiment is designed to stop unnecessary ACK/NACK signal transmissions, thereby reducing interference against other mobile stations.

The present application is based on Japanese Patent Application No.2003-290699, filed August 8, 2003, entire content of which is expressly incorporated herein by reference.

### Industrial Applicability

The present invention is applicable for use in a mobile station apparatus used in a mobile communication system of a W-CDMA scheme.

## Claims

1. A mobile station apparatus comprising:
a first receiver that performs first receive processing including demodulation, decoding, and error detection of a downlink data channel;
a second receiver that performs second receive processing, including demodulation and decoding of a downlink control channel that carries control information required in the first receive processing;
a transmitter that transmits a response signal in response to the error detection in the first receiver via an uplink control channel to a base station apparatus; and
a controller that stops at least one of the first receive processing, the second receive processing, and transmission processing of the response signal in the transmitter, depending on a transmission timing of the response signal.

2. The mobile station apparatus of claim 1, further comprising a detector that detects a period in which no uplink signal is transmitted to the base station apparatus,
wherein, when the period includes the transmission timing of the response signal, the controller stops one or both of the first receive processing with respect to a sub-frame of the downlink data channel corresponding to the response signal and the second receive processing with respect to a sub-frame of the downlink control channel carrying control information that is necessary to receive said sub-frame of the downlink data channel.

3. The mobile station apparatus of claim 1, wherein, when the transmitter repeats transmitting the response signal in response to a same sub-frame of the downlink data channel, the controller stops one or both of the first receive processing with respect to sub-frames of the downlink data channel corresponding to second and later retransmissions and the second receive processing with respect to sub-frames of the downlink control channel carrying control information that is necessary to receive said sub-frames of the downlink data channel.

4. The mobile station apparatus of claim 1, further comprising a detector that detects a timing a destination of the response signal changes from one base station apparatus to another base station apparatus,
wherein, when the timing is detected between a reception start timing of a sub-frame of the downlink data channel and a transmission end timing of a response signal corresponding to said sub-frame of the downlink data channel, the controller stops one or both of the first receive processing with respect to said sub-frame of the downlink data channel and the second receive processing with respect to a sub-frame of the downlink control channel carrying control information that is necessary to receive said sub-frame of the downlink data channel.

5. The mobile station apparatus of claim 1, further comprising a detector that detects a timing a destination of the response signal changes from one base station apparatus to another base station apparatus,
wherein, when the timing is detected between a reception start timing of a sub-frame of the downlink data channel and a transmission end timing of a response signal corresponding to said sub-frame of the downlink data channel, the controller stops the transmission processing of the response signal.

6. A receiving method comprising:
performing first receive processing including demodulation, decoding, and error detection of a downlink data channel;
performing second receive processing, including demodulation and decoding of a downlink control channel that carries control information necessary to receive the downlink data channel;
transmitting to a base station apparatus a response signal in response to the error detection in the first receive processing via an uplink control channel; and
stopping at least one of the first receive processing, the second receive processing, and transmission processing of the response signal, depending on a transmission timing of the response signal.
